# EUROPEAN PATENT APPLICATION

(11) **EP 4 485 720 A1**
(43) Date of publication of application: **01.01.2025**
(21) Application number: 23182654.6
(22) Date of filing: 30.06.2023
(51) Int. Cl.: H02B 13/045

(54) **A METAL ENCLOSURE FOR ELECTRICAL SWITCHGEAR**

(71) Applicant: ABB SCHWEIZ AG, 5400 Baden (CH)
(72) Inventor: THINGSTAD PETTERSEN, Terje, 3734 Skien (NO); BJERKELY, Magnus, 3937 Porsgrunn (NO); LINDQVIST, Björn, 3743 Skien (NO)
(74) Representative: Kransell & Wennborg KB

(57) **Abstract**

The present invention relates to a metal enclosure (100) for electrical switchgear (170), the metal enclosure is configured to be pressurized above atmospheric pressure, the metal enclosure comprising: metal walls (102, 104, 106, 108, 110, 111) sealing a volume (124) for accommodating the electrical switchgear, the metal walls including a first metal wall (102) arranged opposite a second metal wall (110), wherein the second metal wall comprises elongated pockets (112) on the inside face (140) of the second metal wall, and metal beams (120) arranged and attached in the elongated pockets, the metal beams are configured to strengthen the structural integrity of the second metal wall, a plane of the inside face (140) of the second metal wall is substantially aligned with a plane of a surface (142) of the metal beams that faces inside the metal enclosure.

## Description

### Field of the Invention

The present invention relates to a metal enclosure for electrical switchgear.

### Background

Metal enclosures for gas-insulated switchgear encapsulated the switchgear in a pressurized environment. The gas is selected to provide electrical insulation inside the metal enclosure and typical gas is SF6 although other gases are also applicable such as dry air, N2, CO2 or mixture of two or three of N2, O2, CO2.

The dielectric withstand of the gas is proportional to the pressure inside the metal enclosure. Thus, it is advantageous to increase the pressure of the gas inside the metal enclosure. However, this means that the metal enclosure walls must be able to withstand the forces from the increased pressure.

Therefore, it is desirable to improve the ability for metal enclosures for gas-insulated switchgear to withstand higher pressures as is set out in more detail below.

### Summary

In view of the above-mentioned and other drawbacks of the prior art, it is an object of the present invention to provide a metal enclosure that at least partly alleviates the deficiencies with prior art.

According to a first aspect of the invention, there is provided a metal enclosure for electrical switchgear, the metal enclosure is configured to be pressurized above atmospheric pressure, the metal enclosure comprising: metal walls sealing a volume for accommodating the electrical switchgear, the metal walls including a first metal wall arranged opposite a second metal wall, wherein the second metal wall comprises elongated pockets on the inside face of the second metal wall, and metal beams arranged and attached in the elongated pockets, the metal beams are configured to strengthen the structural integrity of the second metal wall, a plane of the inside face of the second metal wall is substantially aligned with a plane of a surface of the metal beams that faces inside the metal enclosure.

The present invention is at least partly based on the realization of attaching metal beams in elongated pockets on the inside facing side of the metal enclosure. The metal beams provide for strengthening the structural integrity of the metal enclosure to thereby improve its ability to withstand a pressure of the gas inside the metal enclosure. In particular, the beams provide for increasing the gas pressure inside the metal enclosure.

Furthermore, the dielectric picture inside the metal enclosure benefits from having relatively planar surfaces facing the electrical switchgear. Therefore, the metal beams are placed in the pockets that are configured so that the inner wall, or inside face of the second wall substantially coincides with the same place as the metal beam surface that face inside the metal enclosure. Thus, a relatively planar inner structure of the metal enclosure is advantageously obtained while at the same time improving the ability to withstand higher pressure.

To withstand higher pressures is particularly important when moving to using dry air, N2, CO2 or a mixture of any two or three of N2, O2, CO2 as the dielectric gas. These gases require higher pressures to provide adequate insulation without increasing the distance between switchgear phases and components compared to more environmental unfriendly alternatives such as SF6. It is desirable to maintain a size, or at least not increase the size of the metal enclosures despite moving to different gases.

Generally, in electrification and gas insulated switchgear (GIS), if the pressure of gas in the metal enclosure exceeds 1.5 bar abs, then the enclosure may be known as a high-pressure enclosure based on known standards. If so, then it has to pass a related pressure routine test and it has made the traditional enclosures heavy and quite expensive. Therefore, the filling pressure of medium voltage (MV)-GIS as is herein discussed is traditionally < 1.5 bar abs, e.g., in range 1.0 - 1.5 bar abs. Advantageously, the herein disclosed metal enclosure is suitable for filling pressure of 1.0 - 4.0 bar abs, preferably for 1.5-3.0 bar abs. In other words, an increased pressure compared to the traditional range of 1.0 - 1.5 bar abs without the need for heavy and excessively large enclosure walls.

According to an embodiment, a width of the metal beams may substantially fill a width of the pockets. That is, there is little or no gaps between the sides of the pockets and the sides of the metal beams. This provides for a more planar inner structure of the metal enclosure.

According to an embodiment, a thickness of the metal beams may substantially correspond to a depth of the pockets. Thus, the metal beams are flush with the inner surface of the second wall to provide a more planar inner structure of the metal enclosure and improve dielectric picture.

According to an embodiment, the metal beams and the pocket jointly may form a channel, wherein the metal beams may comprise a cut-out at each end portion to allow for gas in-flow and gas-out flow. The cut-out at the ends of the metal beams provides for connected to the neighboring walls that are not sealed to the hollow inner space of the beams. This provides for the metal beam to serve as a duct or channel for gas circulation and heat sink for the switchgear inside the metal enclosure.

According to an embodiment, the metal beams may be welded to the pockets. Welding provides for a strong mechanical connection.

According to an embodiment, the second wall may comprise multiple metal plates that are attached to form the complete second metal wall, wherein the joints between the metal plates may be at and along the elongated pockets. That is, the second wall may be divided into several parts that are welded together with the joints at the pockets. Split second walls are not required but simplifies assembly of the metal enclosure.

According to an embodiment, the enclosure may comprise a third metal wall connected with both the first metal wall and the second metal wall, the third metal wall comprising a planar inner surface. The third metal wall may be a top plate of the metal enclosure. The planar inner surface provides for improved dielectric properties inside the metal enclosure.

According to an embodiment, the third metal wall may comprise corrugations and a set of elongated metal elements attached to an inside surface third metal wall facing the inside of the metal enclosure in the valleys of the corrugations to provide a planar inner surface. The corrugations improve the strength of the metal enclosure while the elongated metal elements provide for a planar inner surface.

According to an embodiment, the metal enclosure may comprise a set of elongated metal elements attached to the first metal wall and to metal beams of the second metal wall, the elongated metal elements reach through the inner space of the metal enclosure. The elongated metal elements assist in withstanding higher pressures by providing mechanical connections between the first wall and the second wall. Thus, as the pressure attempts to bulge the first wall and the second wall, the elongated metal elements provide mechanical resistance.

According to an embodiment, the metal enclosure may comprise a set of elongated metal stiffeners attached to a rear side of the first metal wall outside the metal enclosure, wherein the elongated metal elements are attached to the elongated metal stiffeners. The stiffeners, which may be elongate metal plates, provides for distributing the forces on the rear side of the first metal wall which increases the pressure withstand of the metal enclosure further. Using more than one metal stiffener advantageously distributes the forces across a larger area and consequently increases the pressure withstand further.

The walls of the metal enclosure may be made from steel. Steel provides a strong material that can increase the ability for the metal enclosure to withstand the internal pressure.

A rear side is herein generally an outward facing side of the walls. That is, the rear side faces to the outside of the metal enclosure opposite to the volume that the enclosure encompasses.

According to an embodiment, the elongated metal elements may be attached to the first metal wall by welding and to the metal beams by bolting.

According to an embodiment, the elongated metal elements may be metal rods or bars.

According to an embodiment, the rods or bars may comprise longitudinal cuts at their end portions, wherein the elongated metal stiffeners are fitted and attached in the cuts. In this way, the strength of the connection between the rods and the stiffeners are increased. The metal stiffeners may be welded to the rods in the cuts. A longitudinal cut is a cut along the longitudinal axis of the rod.

Alternatively, the metal stiffeners may comprise cuts, wherein the rods are fitted and attached in the cuts.

Equally well, the rods can be welded directly to the walls wall without penetrating the walls. Alternatively, the rod may be welded to an intermediate part and then the intermediate part can be bolted or welded to the wall.

According to an embodiment, the walls of the metal enclosure may be made from steel. Steel provides a strong material that can increase the ability for the metal enclosure to withstand the internal pressure.

In a second aspect of the present invention, there is provided a gas insulated switchgear comprising: a set of electrical switches; and a metal enclosure according to any one of the herein disclosed embodiments.

Further effects and features of the second aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 is a perspective view of a front side of a metal enclosure according to embodiments of the invention;
Fig. 2 is a perspective view of a rear side of a metal enclosure according to embodiments of the invention;
Fig. 3 an exploded view of a metal enclosure according to embodiments of the invention;
Fig. 4 is a close-up cross-section of a metal rods connected to elongated stiffeners according to embodiments of the invention;
Fig. 5 illustrates the metal enclosure with the top plate removed according to embodiments of the invention;
Fig. 6 illustrates the inside of the second metal wall with the metal beams in their pockets forming channels according to embodiments of the invention; and
Fig. 7 illustrates a bottom view of the third wall according to embodiments of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

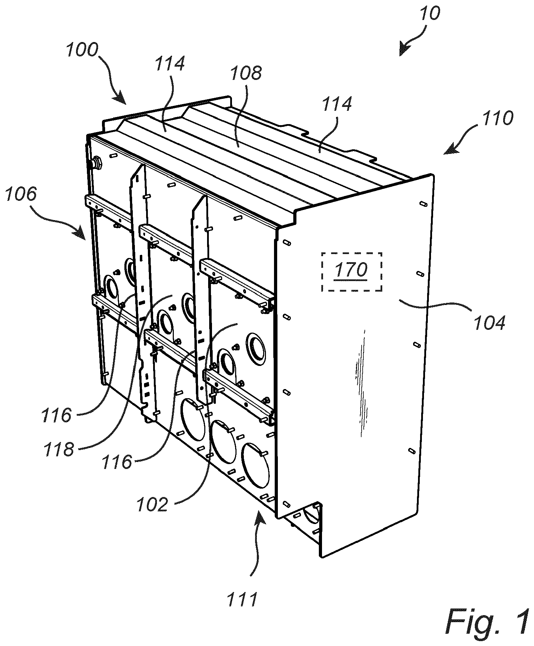

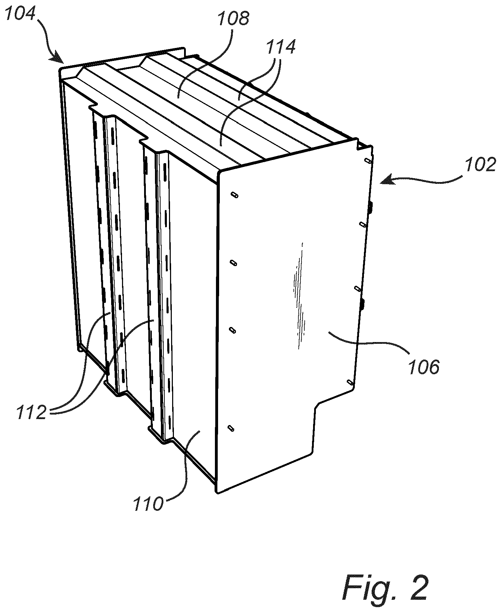

Fig. 1 illustrates a front view and fig. 2 illustrates a rear view of a metal enclosure 100 for electrical switchgear. The metal enclosure 100 is configured to be pressurized above atmospheric pressure.

The metal enclosure 100 comprises metal walls 102, 104, 106, 108, 110, 111 sealing a volume for accommodating the electrical switchgear.

The metal walls including a first metal wall 102 arranged opposite a second metal wall 110. As better seen in fig. 2, the second metal wall 110 comprises elongated pockets 112 on the inside face of the second metal wall 110. Preferably, the walls 102, 104, 106, 108, 110, 111 of the metal enclosure are made from steel.

Furthermore, the third wall 108 provided as a metal plate at the top side of the metal enclosure 100 is connected with both the first metal wall 102 and the second metal wall 110 for example by welding. The third metal wall 108 comprises corrugations 114.

Elongated metal stiffeners 116 are attached to the outer side 118 of the first metal wall 102. The set of elongated metal stiffeners 118 attached to the first metal wall 102 are substantially parallel with each other.

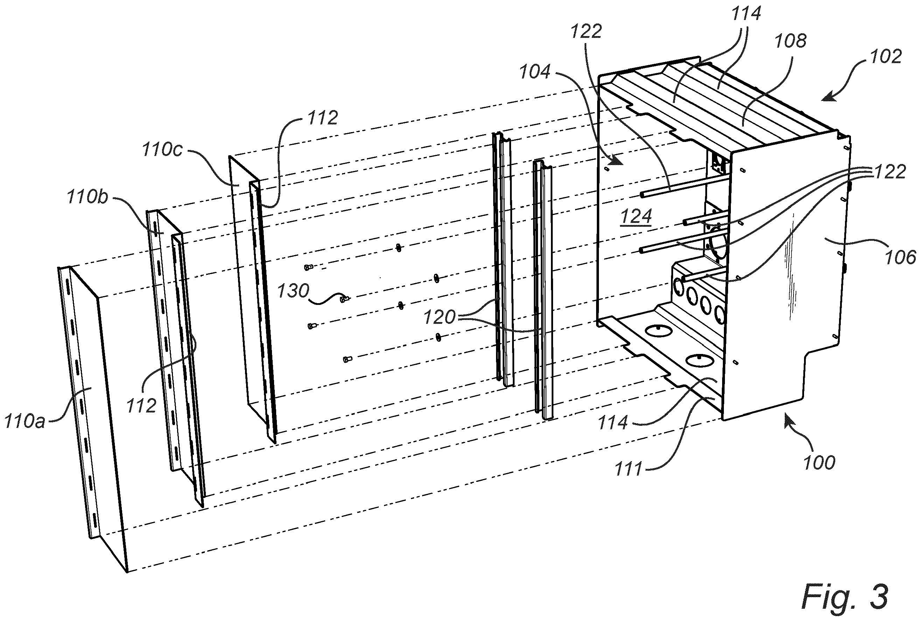

Fig. 3 is an exploded view of the metal enclosure according to embodiments of the invention.

Metal beams 120 are arranged and attached in the elongated pockets 112. The metal beams are configured to strengthen the structural integrity of the second metal wall 110. In other words, with the beams 120, the second metal wall 110 can withstand a higher outward directed pressure from the gas inside the metal enclosure. Furthermore, with the beams 120 arranged in the pockets 112 so that the structure inside the metal enclosure 100 is substantially planar to thereby improve the dielectric picture for the switches inside the metal enclosure 100. That is, no or reduced number of sharp edges or corners inside the metal enclosure 100.

Furthermore, a set of elongated metal elements 122 are attached to the first metal wall 102 and to the metal beams 120 of the second metal wall 110. The elongated metal elements provided as rods or bars reach through the inner space 124 of the metal enclosure 100. The rods or bars 122 preferably attached to the elongated metal stiffeners 116, see e.g., fig. 1, attached to the rear side 118 of the first metal wall 102 outside the metal enclosure. The elongated metal elements 116 are attached to the first metal wall 102 by welding or bolting and to the metal beams 120 by bolting with bolts 130 or by welding.

Preferably, the rods 122 are welded to the inner side of first wall 102 without penetrating the wall 102.

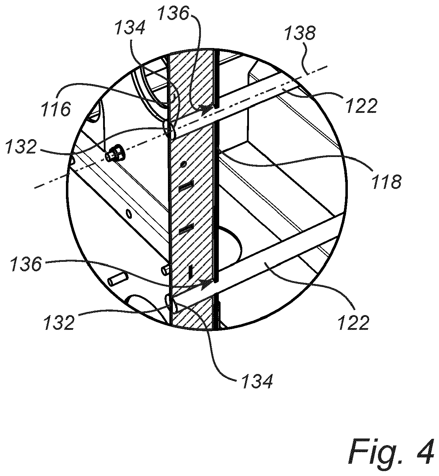

However, in one possible embodiment and as better seen in fig. 4, the rods 122 or bars comprises longitudinal cuts 132 at their end portions 134. The elongated metal stiffeners 116 are fitted and attached in the cuts 132. Alternatively, the metal stiffeners 116 may comprise cuts, wherein the rods 122 are fitted and attached in the cuts.

In this example, the rods 122 are fed through through-holes 136 in the first metal wall 102 and welded to the first metal wall 102. Furthermore, the metal stiffeners 116 are also welded to the first metal wall 102 along the contact interface between the metal stiffener and the rear side 118 of the first metal wall 102.

To improve the connection between the rods 122 and the stiffeners 116, the rods 122 may comprise longitudinal cuts 132 at their end portions 134 which extend outside the metal enclosure 100 away from the rear side 118 of the first metal wall 102. The cuts 132 are along the respective longitudinal axis 138 of the rods 116a-d. The metal stiffeners 116 may be arranged in the cuts 132 where they are welded to be fixed to the respective rods 122.

The rods 122 may be welded to one metal stiffener 116 on the first metal wall 102. The metal stiffener 116 is fitted in the cuts 132 at the ends 132 of the rods 122. The other rods are welded to another metal stiffener which is fitted in the cuts of the other rods. Alternatively, the metal stiffeners 116 may comprise cuts, wherein the rods 122 are fitted and attached in the cuts.

Welds are made along the interface of the metal stiffeners 130 and the cuts 132 in the rods 120 on both sides, e.g., rod halves, of the cuts 132. The cuts may be made in the center of the rod so that the cut splits the end portion 134 in half.

The bottom plate 111 preferably comprise corrugations 114.

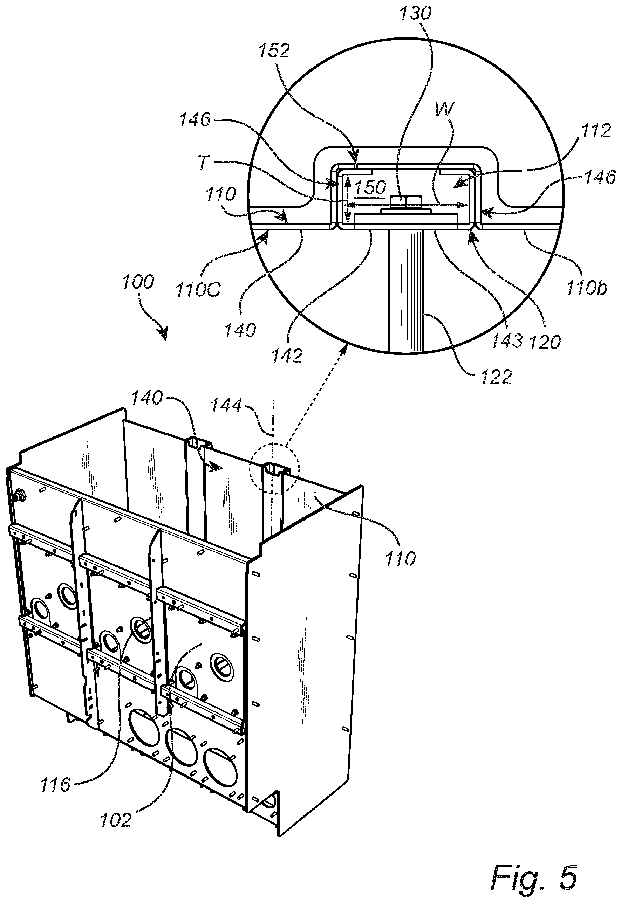

Fig. 5 illustrates the metal enclosure 100 with the top plate 108 removed. As seen in the close-up view, the metal beam lies inside the pocket 112 in the second metal wall 110. Especially, the inside face 140 of the second metal wall 110 is substantially aligned with a plane of a surface 142 of the metal beam 120 that faces inside the metal enclosure 100. In this way, the inside structure of the metal enclosure 100 at the second metal wall 110 is substantially planar. Preferably, the entire inner surface 140 combined with the surface 142 of the metal beam 120 is substantially planar.

Preferably, the width W of the metal beam, measured orthogonal to the longitudinal axis 144 of the metal beam 120 fills the width of the pocket 112. Thus, the metal beam 120 spans the entire width of the pocket 112 so that there is no or very little gaps between the sides 146 of the metal beam 120 and the corresponding sides of the pockets 112.

Preferably, a thickness T of the metal beams 120 substantially corresponds to a depth of the pockets 112. That is, the surface 142 of the metal beams 120 that face inside the metal enclosure 100 is flush with the inner surface 140 of the metal enclosure so that they jointly form a planar surface. Note that at the intersection between the metal beam 120 and the inner surface 140 a small discontinuity may occur.

The metal beams 120 has a hollow inner space 150 that allows access to the bolts 130 that are fixated to the rods 122 through holes of the beams 120 before the metal beams 120 are attached in the pockets 112. Furthermore, the beams may be formed from a bended sheet material into the strong U-shape. Overall, the pockets provide for a way to anchor the strengthening metal beams 120 without compromising the planar inner surface 140 of the metal enclosure 100. The metal beams 120 may be welded to the pockets 112.

Turning back to fig. 3, the second metal wall 110, e.g., the rear wall comprises, in this embodiment, multiple metal plates 110a-c that are attached to form the complete second metal wall 110. The joints 152, better seen in fig. 5, between the metal plates 110a-c are at and along the elongated pockets 112, that is along the axis 144. The rear plates 110a-c may be welded together with the metal beam 120 with a vertical weld. For this, the rear plates 110a-c need holes or other shapes for welding. However, a laser weld is envisaged for welding through the rear plates 110a-c.

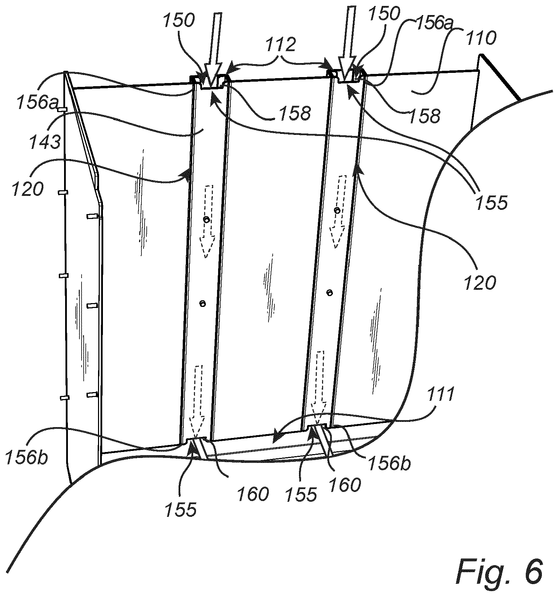

Fig. 6 illustrates the inside of the second metal wall 110 with the metal beams 120 in their pockets 112. The inner space between the metal beams 120 and the pockets 112 jointly form a channel 150. The metal beams 120 comprise a cut-out 155 at each end portion 156a, 156b to allow for gas in-flow through inlet 158 and gas-out flow though outlet 160. When the top plate 108 is attached, the cut-outs 155 at the first end portions 156a, generally U-shaped, polygonal, or rounded, provide an opening 158 into the channel 150. In a similar way, the cut-outs 155 at the second end portions 156b at the bottom plate 111 provides an opening 160 to the channel 150 at the bottom plate 111. The channel provides a chimney effect for air circulation and heat sink inside the metal enclosure 100. The cut-outs are made in the inside facing portion 143 of the metal beams 120, the inside facing portion 143 facing into the metal enclosure and that comprises the planar surface 142.

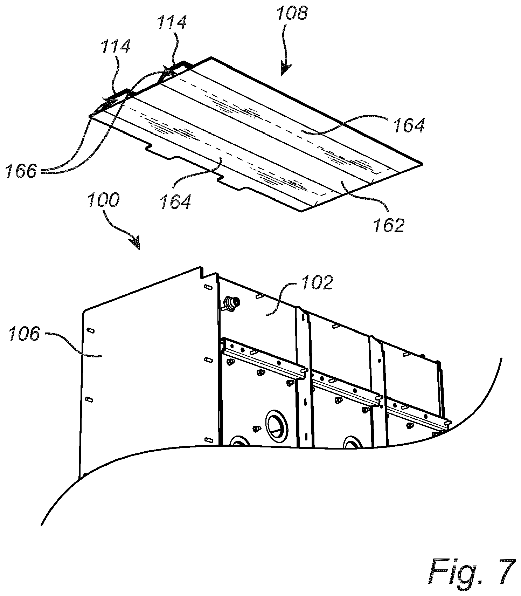

Fig. 7 illustrates a bottom view of the third wall 108, or top plate 108. The top plate 108 is, when mounted, connected with both the first metal wall 102 and the second metal wall 110. The top plate 108 is preferably also connected with the side metal walls 106 and 104.

The third metal wall 108 comprises a planar inner surface 162 which improves the dielectric properties inside the metal enclosure 100.

In this embodiment, the third metal wall 108 comprises corrugations 114. To obtain the planar surface, a set of elongated metal elements 164, e.g. plates, are attached to an inside surface of the third metal wall facing the inside of the metal enclosure 100 in the valleys 166 as seen from the inside of the corrugations to provide the planar inner surface. That is, the plates 164 are placed in regions of the valleys 166 to even out the valleys 166 on the inside of the top plate 108 so that the overall inside surface 162 is planar.

In alternative embodiments, the top plate 108 is planar without corrugations. This provides a planar inner surface. In this case, to strengthen the top plate external metal reinforcement bars may be attached to the outer surface of the top plate 108.

There is further provided, see fig. 1, a gas insulated switchgear 10 comprising a set of electrical switches 170, and a metal enclosure 100 pressurized by a gas. The switches may be adapted for operation at 10-52 kV, preferably 12/24/36, 40.5 kV and may have a modular construction regarding the combinations of switches that can be assembled in sequence inside the metal gas enclosure 100. The switches may for example be e.g., CC, CCV, CCF, CCCC etc., where C: Cable switch module, De: Direct cable connection with earthing module, D: Direct cable connection module, F: Switch-fuse disconnector module, V: Vacuum circuit-breaker module. Preferably, the gas inside the metal enclosure is dry air, N2, CO2 or a mixture of any two or three of N2, O2, CO2.

Although three plates 110a-c are shown in the drawings, the number of plates depends on the specific implementation at hand and may thus be more than threes or less than three. Similarly, the number of rods, here being four, or number of metal beams here shown as 2, are shown as examples and may vary depending on implementation.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A metal enclosure (100) for electrical switchgear (170), the metal enclosure is configured to be pressurized above atmospheric pressure, the metal enclosure comprising:
metal walls (102, 104, 106, 108, 110, 111) sealing a volume (124) for accommodating the electrical switchgear, the metal walls including a first metal wall (102) arranged opposite a second metal wall (110), wherein the second metal wall comprises elongated pockets (112) on the inside face (140) of the second metal wall, and
metal beams (120) arranged and attached in the elongated pockets, the metal beams are configured to strengthen the structural integrity of the second metal wall, a plane of the inside face (140) of the second metal wall is substantially aligned with a plane of a surface (142) of the metal beams that faces inside the metal enclosure.

2. The metal enclosure according to claim 1, wherein a width (W) of the metal beams substantially fills a width of the pockets.

3. The metal enclosure according to any one of claims 1 and 2, wherein a thickness (T) of the metal beams substantially corresponds to a depth of the pockets.

4. The metal enclosure according to any one of preceding claims, wherein the metal beams and the pocket jointly form a channel (150), wherein the metal beams comprise a cut-out (155) at each end portion (156a,b) to allow for gas in-flow (158) and gas-out flow (160).

5. The metal enclosure according to any one of the preceding claims, wherein the metal beams are welded to the pockets.

6. The metal enclosure according to any one of the preceding claims, wherein the second wall comprises multiple metal plates (110a-c) that are attached to form the complete second metal wall, wherein the joints between the metal plates are at and along the elongated pockets.

7. The metal enclosure according to any one of the preceding claims, comprising a third metal wall connected with both the first metal wall and the second metal wall, the third metal wall comprising a planar inner surface (162).

8. The metal enclosure according to claim 7, comprising corrugations (114) and a set of elongated metal elements (164) attached to an inside surface third metal wall facing the inside of the metal enclosure in the valleys (166) of the corrugations to provide a planar inner surface.

9. The metal enclosure according to any one of the preceding claims, comprising a set of elongated metal elements (122) attached to the first metal wall and to metal beams of the second metal wall, the elongated metal elements reach through the inner space of the metal enclosure.

10. The metal enclosure according to claim 9, comprising a set of elongated metal stiffeners (116) attached to a rear side of the first metal wall outside the metal enclosure, wherein the elongated metal elements are attached to the elongated metal stiffeners.

11. The metal enclosure according to claim 10, wherein the elongated metal elements are attached to the first metal wall by welding or bolting and to the metal beams by bolting or welding.

12. The metal enclosure according to any one of claims 10 and 11, wherein the elongated metal elements are metal rods or bars.

13. The metal enclosure according to claim 12, wherein the rods or bars comprising longitudinal cuts (132) at their end portions, wherein the elongated metal stiffeners are fitted and attached in the cuts, or wherein the metal stiffeners comprising cuts, where the rods are fitted and attached in the cuts.

14. The metal enclosure according to any one of the preceding claims, wherein the walls of the metal enclosure are made from steel.

15. A gas insulated switchgear (10) comprising:
a set of electrical switches; and
a metal enclosure according to any one of the preceding claims pressurized by a gas.
